# EUROPEAN PATENT SPECIFICATION

(11) **EP 2 618 256 B1**
(45) Date of publication and mention of the grant of the patent: **18.12.2019**
(21) Application number: 13151307.9
(22) Date of filing: 15.01.2013
(51) Int. Cl.: G06F 8/61

(54) **Framework and system to distribute applications for heterogeneous platforms**
Rahmenumgebung und System zur Verteilung von Anwendungen für heterogene Plattformen
Structure et système de distribution d'applications pour plates-formes hétérogènes

(30) Priority: 23.01.2012 US 201213356077
(43) Date of publication of application: 24.07.2013
(73) Proprietor: Sony Corporation, Tokyo 108-0075 (JP)
(72) Inventor: Almstrand, Cristian, Encinitas California 92024 (US); Clement, Jason, San Diego California 92131 (US); Hu, Leong, San Diego California 92127-1898 (US); Larsen, Tonni, Escondido California 92026 (US); Varatharajan, Sivaraman, San Diego California 92127 (US); Venkatesan, Prem, San Diego California 92127 (US)
(74) Representative: D Young & Co LLP

(56) References cited:
- EP-A1- 2 378 739
- WO-A2-2007/038766
- US-A1- 2005 149 925

## Description

### BACKGROUND

### 1. Field of the Invention

The present invention relates generally to application distribution systems and, more particularly, to methods, systems and apparatus that provide a framework for presenting and distributing applications for heterogeneous platforms.

### 2. Discussion of the Related Art

Presently, application software programs ("Apps") are created for and used by a variety of different electronic components, such as mobile devices (like smart phones, tablet computers, laptops, etc.) and stationary devices (like desktop computers, servers, stationary touch screen systems, etc.). These Apps are normally written in code (e.g., Application Programming Interface or "API") that is specific to the type of component the App is being used on (or target device) and capable of interfacing with the Operating System ("OS") used on that component (e.g., iOS platform for Apple brand components like iPod, iPhone and iPad, Android OS for Android based components, Windows OS for Windows based components, Blackberry OS for Blackberry based components, Play Station OS for Sony mobile devices, Linux OS for Linux based systems, etc.). In view of this, Apps are currently presented and distributed through systems that are setup to serve specific types of components or families of components that operate on the same platform (e.g., code, OS, etc.). For example, Apple has its App Store website for Apple platform Apps, Google has its Android Market site for Android platform Apps, Windows has its Windows Marketplace site for Windows platform Apps, Blackberry has its Blackberry App World site for Blackberry platform Apps, Sony has its PSN Store for Sony platform Apps, etc.

All of these sites specialize in selling Apps that are specific to their platforms and, thus, require consumers to go to a variety of different network locations if they have multiple components for which they seek Apps. In addition, the fact that App sites are limited to specific platforms, often can fail to provide consumers with a complete or, at least, more comprehensive list of Apps that are available for their electronic component because certain Apps may not be listed on a particular platform's marketplace or App store even though the App is capable of running on that particular electronic component (which may be due to the App developers failure to place the App on a specific platform's App marketplace/store or may be due to the particular platform's App marketplace/store refusing to list the App because it works with alternate devices and platforms as well as their own).

To address this issue, some App developers simply create separate Apps for each platform they wish to provide their App for or support and then provide the individual Apps to the respective marketplaces or App stores designated for that platform. Other developers attempt to create cross platform Apps that are readable by multiple platforms either by using conditional compile statements in the Apps or by creating generic OS and/or App code that can be read by multiple platforms. None of these options are desirable due to the amount of expense and time it takes to develop such Apps and/or distribute the Apps to all the various App marketplaces/stores and due to the fact that such attempts can lead to defective operation of the App and/or the consumer electronic component or device, and also due to the fact some App marketplaces/stores block Apps that are cross platform based.

Accordingly, it has been determined that a need exists for a framework and systems and methods relating to same which overcome the aforementioned limitations with respect to and which further provide capabilities, features and functions, not available in current systems and methods relating to same.

WO 2007/038766 describes methods and systems for data transfer between electronic hand-held devices and computer systems, which include secure links between various devices, enhancements to electronic hand-held devices that enable service applications to run continuously or intermittently on the devices and deployment of dynamically created service applications to electronic hand-held devices.

### SUMMARY OF THE INVENTION

Aspects of the invention are defined in the appended claims.

In accordance with the present invention, systems, methods and apparatuses that provide framework for presenting and distributing applications for heterogeneous platforms (or heterogeneous applications) are disclosed. Described are methods for presenting and distributing heterogeneous applications comprising: providing a remote processing system containing a plurality of applications wherein at least some of the applications are heterogeneous applications programmed for different platforms, the remote processing system capable of being connected to a local processing system to present and distribute at least one of the plurality of heterogeneous applications to consumers; determining compatibility for each of the plurality of applications via the remote processing system; and presenting to a consumer via the remote processing system only those applications of the plurality of applications that are compatible with a target processing system.

Also described are systems for presenting and distributing heterogeneous applications which may comprise: a storage medium for storing a plurality of applications wherein at least some of the applications are heterogeneous applications programmed for different platforms; and a first processing system connected to the storage medium and configured to determine compatibility for each of the plurality of applications and to present to a second processing system only those applications of the plurality of applications that are compatible with a target processing system.

Apparatuses such as computer program products are disclosed comprising a medium for embodying a computer program for input to a processor based system and a computer program embodied in the medium configured to cause the processor based system to perform steps comprising: receiving a plurality of applications wherein at least some of the applications are heterogeneous applications programmed for different platforms; determining compatibility for each of the plurality of applications; and communicating which applications from the plurality of applications are compatible with a target processing system once the target processing system is identified.

Methods of presenting and distributing heterogeneous applications for a plurality of different consumer devices are disclosed comprising: providing a remote processing system having an application identification module, a compatibility validation module, a distribution module and a storage medium for storing a plurality of applications wherein at least some of the plurality of applications are heterogeneous applications programmed for different platforms; identifying which platform each of the plurality of applications is programmed for via the application identification module; detecting with the compatibility validation module which of the plurality of different consumer devices and applications are compatible with one another; and preparing compatible applications for download and installation to a target consumer device using the distribution module once the target device is identified.

### BRIEF DESCRIPTION OF THE DRAWINGS

The above and other aspects, features and advantages of several embodiments of the present invention will be more apparent from the following more particular description thereof, presented in conjunction with the following drawings.
Fig. 1 depicts a simplified block diagram representation of a presentation and/or distribution of a plurality of heterogeneous applications.
Fig. 2 depicts a simplified block diagram of a processing system for presenting and distributing heterogeneous applications and illustrating a way in which compatibility of applications and consumer devices may be determined.
Fig. 3 depicts a simplified flow diagram of a process of displaying and/or distributing heterogeneous application according to some embodiments.
Fig. 4 depicts a simplified flow diagram of a process for installing application parameter data.
Fig. 5 depicts a simplified flow diagram of a process for determining compatibility of applications and consumer devices.
Fig. 6 depicts a block diagram representation of an alternate system for use in implementing methods, techniques, devices, apparatuses, systems, services, servers, sources and the like in presenting and/or distributing heterogeneous applications in accordance with some embodiments.

Corresponding reference characters indicate corresponding components throughout the several views of the drawings. Skilled artisans will appreciate that elements in the figures are illustrated for simplicity and clarity and have not necessarily been drawn to scale. For example, the dimensions of some of the elements in the figures may be exaggerated relative to other elements to help to improve understanding of various embodiments of the present invention. Also, common but well-understood elements that are useful or necessary in a commercially feasible embodiment are often not depicted in order to facilitate a less obstructed view of these various embodiments of the present invention.

### DETAILED DESCRIPTION

The present invention relates to methods, systems and apparatuses that provide a framework for presenting and/or distributing applications for heterogeneous platforms. The following description is presented to enable one of ordinary skill in the art to make and use the invention, as is provided in the context of a patent application and its requirements. Various modifications to the disclosed embodiments will be readily apparent to those skilled in the art, and the generic principles herein may be applied to other embodiments. Therefore, the present invention is not intended to be limited to the embodiments shown, but is to be accorded the widest scope consistent with the principles and features described herein.

Reference throughout this specification to "one embodiment," "an embodiment," "some embodiments," "some implementations," or similar language means that a particular feature, structure, or characteristic described in connection with the embodiment is included in at least one embodiment of the present invention. Thus, appearances of the phrases "in some embodiment," "in some implementations," and similar language throughout this specification may, but do not necessarily, all refer to the same embodiment. Likewise, references to a user, installer, customer, custodian, developer, etc. should be interpreted to be exemplary and not limiting and should be understood to include other individuals, people or things if appropriate.

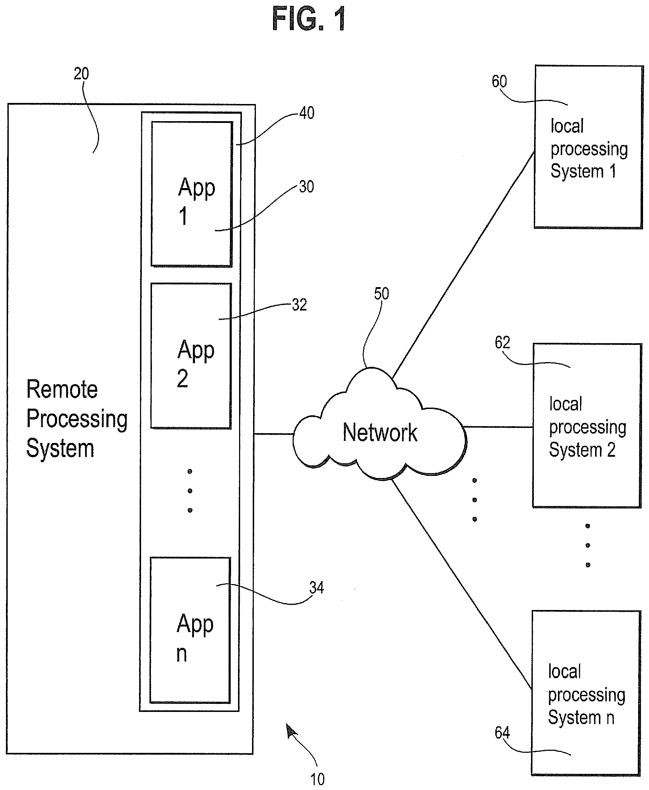

Turning now to the drawings, Fig. 1 depicts a simplified block diagram of a system 10 having a framework for presenting and/or distributing heterogeneous applications in accordance with one embodiment of the invention. The system 10 includes a first processing system, such as remote processing system 20, having a plurality of applications 30, 32 and 34 stored on a storage medium 40 either connected to the system 10 or part of the system 10. The storage medium 40 typically includes one or more processor readable and/or computer readable media capable of being accessed by at least the processing system 20, and can include volatile and/or nonvolatile media, such as RAM, ROM, EEPROM, flash memory and/or other memory technology. Further, the storage medium 40 is shown as internal to the system 10; however, the storage medium 40 can be internal, external or a combination of internal and external memory. The internal memory can be any relevant memory such as, but not limited to, magnetic or solid state hard drives, cache, registers, RAM, virtual memory, expansion cards or drives, blade drives, etc. Similarly, the external memory can be substantially any relevant memory such as, but not limited to, computer or server hard drives, one or more of flash memory secure digital (SD) card, universal serial bus (USB) stick or drive, other memory cards and other such memory or combinations of such memory.

The storage medium 40 can store code, software, executables, scripts, data, content, multimedia content and/or segments, file(s), programming, programs, media stream, media files, textual content, log or history data, user information and the like. In a preferred form, the storage medium 40 stores code relating to application program instructions ("API") and operating systems (OS) for each application 30, 32, 34 and software that implements user interfaces and allows the user (e.g., App developer, potential consumer, consumer, etc.) to interact with the system 10 as will be discussed further below.

As illustrated in Fig. 1, any number of applications may be provided via system 10 (e.g., App 1 (30), App 2 (32)... App n (34)), and as will be discussed in further detail below, in at least one form, the system 10 may be configured to allow for uploading of applications and plugins so that an extensive database of applications may be built and maintained over time (including the addition of new platforms/API sets over time as well). At least some of the applications 30, 32, 34, etc. stored on system 10 are programmed for different platforms making the system 10 a collection of heterogeneous applications or a system capable of distributing applications for heterogeneous platforms.

In the form illustrated in Fig. 1, the system 10 is connected to a network 50 for providing a portal for displaying and/or distributing applications for heterogeneous platforms. For example, the system 10 may be connected to and accessible via the Internet so that application developers or others can upload applications to the system 10 and/or potential consumers can view and/or purchase applications stored on system 10. In other forms, the system may be connected to other types of networks including, but not limited to, geographically designated networks (e.g., local area networks (LANs), wide area networks (WANs), etc.), real or virtual networks or public, semi-private or private networks (e.g., virtual private networks (VPNs), etc.), and may be connected to such networks physically, wirelessly, or both. For example, in some forms, the system may be maintained by a custodian that installs some or all of the applications 30, 32, 34, etc. on the system 10 and/or that regularly updates the system to include new Apps/platforms as they are developed or used in commerce.

In Fig. 1, the system 10 is connected to a second processing system, such as local processing system 60, 62 or 64 via network 50. In the form illustrated, the local processing systems may be any electronic device including consumer devices or products, such as, but not limited to, desktop computers, laptops, notebooks, tablets, personal digital assistants, smart phones or other mobile communication devices, game consoles, portable media players or other electronic devices. In addition, like the number of applications mentioned above, any number of second processing systems (e.g., Local Processing System 1 (60), Local Processing System 2 (62)... Local Processing System n (64)) may be connected to the first processing system 20 via network 50.

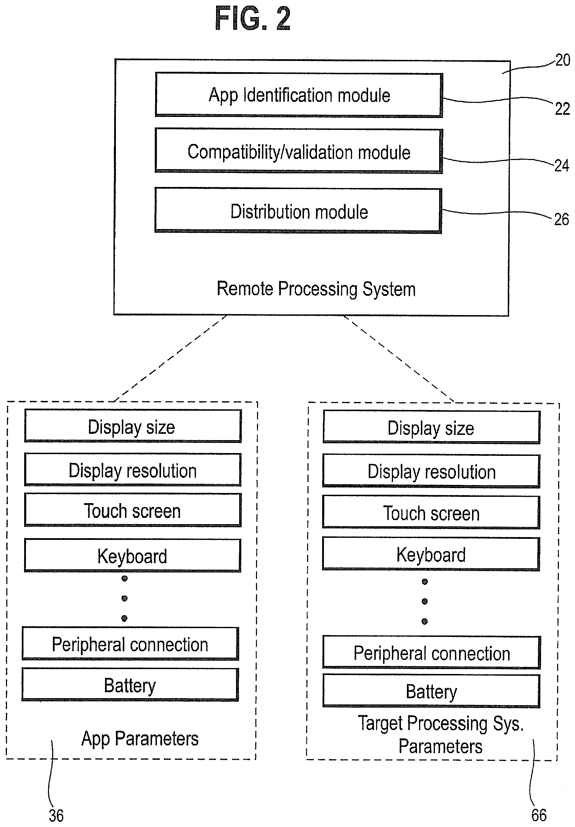

In a preferred form and as illustrated in Fig. 2, system 10 includes an API or App identification module 22, a compatibility validation module 24 and a distribution module 26. The App identification module 22 is used to identify on which API an installed (e.g., uploaded) application was built. The compatibility validation module 24 determines which applications and target devices are compatible with one another, and the distribution module 26 is used to download and prepare for installation a selected application to the target device or target processing system. The target device may be the second processing system (e.g., local processing system 60, 62, 64, etc.) or a device connected to or capable of being connected to the local processing system. For example, in one instance a user may access the system 10 via a tablet computer and indicate that the applications he/she wishes to see are for the tablet computer thereby making the tablet computer both the local processing system and the target device or target processing system. In another instance, a user may access system 10 via a laptop or desktop computer and indicate that the applications she/he wishes to see are for a portable electronic device such as an iPhone or an iPod capable of being connected to laptop or desktop computer thereby making the local processing system the laptop or desktop computer and the target processing system the iPhone or iPod portable electronic device. In the latter situation, the local processing system may temporarily or permanently download the application selected for the target device to a desktop or device manager or similar program that will in-turn download the selected application to the target device when the target device is connected to the local processing system (e.g., when the target device is syncing with the local processing system).

In one form, the API identification module 22 identifies on which API an uploaded application was built by comparing at least a portion the API code (e.g., a key, designator, actual code language, etc.) to a directory or index to identify the API. The directory can be stored as part of the system 10 and updated using plugins (as will be discussed further below) or, in alternate embodiments, can be an external directory maintained and updated separate and apart from system 10 to perform the desired identification. In yet other embodiments, the application API set may be identified by simulating operation of the API using different platforms to determine which platform the API is compatible with. An advantage to the latter configuration is that the system 10 can automatically determine if the application will run on platforms other than the specific platform it was intended to run on and then identify the application accordingly so that it will be presented to users looking for applications on both platforms rather than solely the original platform is was intended to be programmed for or run on.

The compatibility validation module 24 may be configured to detect compatible applications and target devices in a variety of different ways. In one form, the compatibility validation module 24 detects which target devices an application is compatible with once the application has been identified. As with the API identification directory or index, the list, index or directory of compatible target devices may be maintained as part of system 10 and periodically updated via plugins installed by a custodian, independent developer or other. Alternatively, the directory of compatible target devices may be an external directory or index maintained and updated separate and apart from system 10 (e.g., updated and/or maintained by a third party or third parties). The compatibility detection may be configured to be done once, e.g., when an application is initially installed on system 10, or in alternate embodiments, may be configured to be done periodically, continuously or each time a target device is identified (e.g., selected, designated, detected, etc.) so that any updates to the list of compatible target devices can be picked-up before presenting the list of compatible applications to a user.

In other forms, the compatibility validation module 24 may detect compatible applications and target devices by comparing parameter data of both the applications and the target devices and identifying those that have matching parameter data (e.g., some, all or a predetermined amount of matching parameter data) as compatible applications and target devices. The parameters or parameter data may comprise any information that helps identify applications and/or target devices that will be compatible with one another. For example, in the form illustrated in Fig. 2, exemplary application parameter data 36 and target device or processing system parameter data 66 are illustrated as comprising data relating to display size, display resolution, whether or not a touch screen or display is used, type of keyboard used or intended to be used, peripheral connections and interface type, battery type, etc. Other parameters may also be included such as platform data (e.g., hardware architecture, software framework, OS or API programming code, etc.), camera enabled (e.g., whether application requires camera and device includes camera), flash enabled, speaker enabled, memory size (or available free space), vibration capability, audio capability, modem enabled, wireless ready and/or telecommunication standards (e.g., GSM, CDMA, EDGE, 2G, 3G, 4G, etc.) and the like.

In determining compatibility between applications and target devices, the system compares the application parameter data 36 and target device parameter data 66 and identifies compatible applications and target devices based on matching parameter data. As mentioned above, the system 10 can be configured to require matching of all the parameter data 36, 66 or a predetermined amount of the parameter data 36, 66. For example, in the latter case, the parameter data may be prioritized and the system may be configured to only require certain high priority parameters to be matched, such as for example, requiring that the platform data match but not necessarily the camera, speaker or display size. This may lead to an application and target device being identified as compatible that are not one hundred percent (100%) compatible (e.g., the application does not run as well as it could on the target device, the target device is not capable of taking advantage of all of the features of the application, etc.), but that have been deemed acceptable enough to be identified as compatible.

Some lower priority parameters 36, 66 may be identified that do not have to match in order for an application and target device to be identified as being compatible. For example, in one form, system 10 may be configured to indicate that speaker parameters do not have to match so long as a speaker is present on the target device. This may result in the application running on the target device but not having as clear of audio as the application would otherwise have had the target device's speaker parameter data matched the application speaker parameter data. Conversely and by way of example, the system 10 may be configured to indicate that certain parameter data 36, 66 has to match for items that are critical in order for the application to work appropriately on the target device. Thus, for a camera application, the system 10 may require that the camera parameter data for the application and target device 36, 66 match one hundred percent (100%) to ensure that the application will work properly on the target application. If the target device failed to have a camera, one could see how this would be problematic if a camera application was identified as compatible with the target device. In yet other instances, however, a camera application and non-camera equipped target device may be identified as compatible if it turns out that the application can be run without the camera feature needing to be used.

In some forms, the system 10 may be configured to identify applications and target devices as compatible when a predetermined amount of parameter data 36, 66 matches, but allow for a custodian, developer, user, or other, to flag instances where he/she/they/it feel the applications do not work sufficiently or satisfactorily on a target device despite being identified as compatible. For example, the system 10 could be configured to automatically stop identifying these applications/target devices as compatible, or could wait for a predetermined number of such flaggings to stop identifying these applications/target devices as compatible, or could have a custodian look into the matter further and make a final decision as to whether to continue to identify these as compatible or not after a predetermined number of flaggings have been received. Alternatively, the system 10 could be configured to more rigorously require matching of parameter data 36, 66 before applications and target devices are identified as compatible.

The system 10 could also be configured to allow for the parameter data 36, 66 to be prioritized by the developer who installs or uploads the application to the system or allow any of these to set exactly which parameters have to match in order to ensure that the application is only presented as compatible to target devices in the manner in which the developer wants the application to be presented. Thus, by way of example, if an App developer feels that it is very important that a particular parameter be matched such as sound in order for their application to be appreciated, the developer could prioritize or designate this parameter so that it has to be matched in order for the application to be presented to a target device. In alternate forms, such authority or power may be given to others as well, such as the system custodian, user, etc. In similar fashion, the system 10 may be configured to make one or more parameters 36, 66 override other parameters that a custodian, developer, user or other can set (or only one of these can set) in order to ensure that certain applications/target devices are either identified as compatible or not compatible.

In the embodiment illustrated in Fig. 2 and discussed above, the compatibility validation module detected which target devices an application is compatible with and it was discussed that this could be done once at the time an application is installed on system 10, or redone periodically or continuously, or at the time the target device is identified for presentment of applications. In yet other forms, system 10 may be configured so that the compatibility validation module detects which applications are compatible with a target device once the target device is identified. For example, the system 10 may be configured so that either a user identifies the target device he/she wishes to have applications presented for or the system 10 automatically detects this once the target device connects to the system 10, and then the system presents only those applications that are compatible with the identified target device. This too could be done once when the target device connects to the system or periodically or continuously in order to help make sure that recently added compatible applications are presented to the user or potential consumer for downloading.

The distribution module 26 prepares applications selected for downloading and installation to the target device for downloading and installation. The system 10 can be configured to deliver the selected applications in any conventional format (e.g., .exe, compressed, self-extracting, not self-extracting, etc.) or, as will be discussed now, future formats that are added to the system via a plugin.

In a preferred form, the API identification module 22, compatibility validation module 24 and distribution module 26 are all open modules and can accommodate updating to include new types of platforms or API sets, parameter data, prioritization or handling rules, or downloading and installation formats. In one form such updating is accommodated via the use of plugins or addons that add these abilities to system 10. For example, when new types of platforms or API sets are developed or are commercially used, corresponding API identification plugins, compatibility validation plugins and distribution plugins may be created and put into use in system 10 via plugins. These plugins may be developed and installed by a custodian of system 10, by independent developers, or a combination of both.

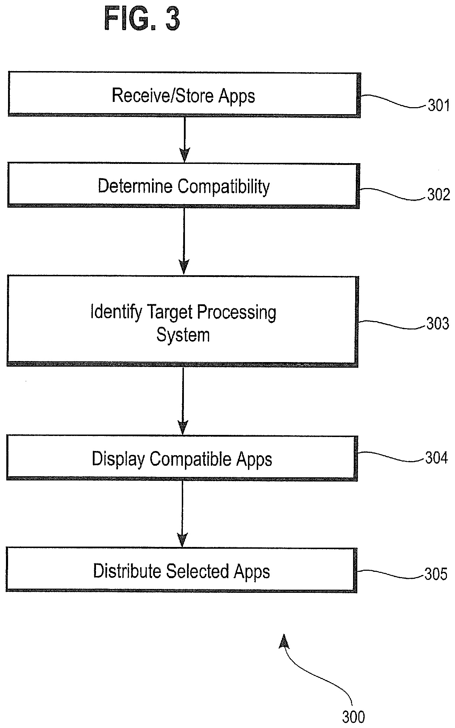

Fig. 3 depicts a simplified flow diagram of a method or process 300 that forms a framework for distributing applications for heterogeneous platforms. In step 301, applications (e.g., 30, 32, 34, etc.) are received and stored in a processing system (such as processing system 10 discussed above). The applications typically contain software programs and application programming interface (API) rules and specifications for allowing software on a target device to interface with/run the application. The applications may be installed to the system using any conventional method for installing such programs including, but not limited to, uploading remotely or locally, wirelessly (e.g., RF, infrared, etc.), installing via drives or peripherals connected to the first processing system, etc.

In step 302 application and target device compatibility is determined. Any of the methods discussed above for determining compatibility may be used. For example, in one form the system identifies which API the installed application was built on and determines or detects which target devices the installed application is compatible with. In other forms, the system may further determine compatibility by comparing application and target device parameters as discussed above. In yet other forms, the system may automatically detect what devices are compatible with the application via a reading of at least a portion of the application code or by conducting simulations of running the applications on different devices as mentioned above.

In step 303 the target device is identified. This too can be performed in a variety of different ways. For example, in one form this is accomplished by having a user identify to the system what type of device she/he is desiring to view applications for and potentially download from the system. In another form, the system may automatically detect or identify the target device by communicating with the target device and obtaining this information. In still other forms, particularly those where the target device is connected directly to the first processing system as a peripheral device (e.g., like a mobile device tethered to a laptop or desktop computer by a USB, IEEE 1394 connector, etc.), the system may automatically detect or identify the target device by detecting the device when it is connected to the processing system.

Once the target device is identified, the system displays compatible applications for the target device in step 304 so that users can view and select from the displayed applications for downloading and installing. The compatible applications may be presented in any conventional manner (e.g., by icon, list, detail, tile, folder, etc.). The actual distribution of any selected application is covered in step 305 during which the system prepares selected applications for downloading and installation on the target device. As mentioned above, the downloading and installation may be accomplished using any conventional data format and may take advantage of any conventional software installer programs (e.g., Windows Installer, etc.).

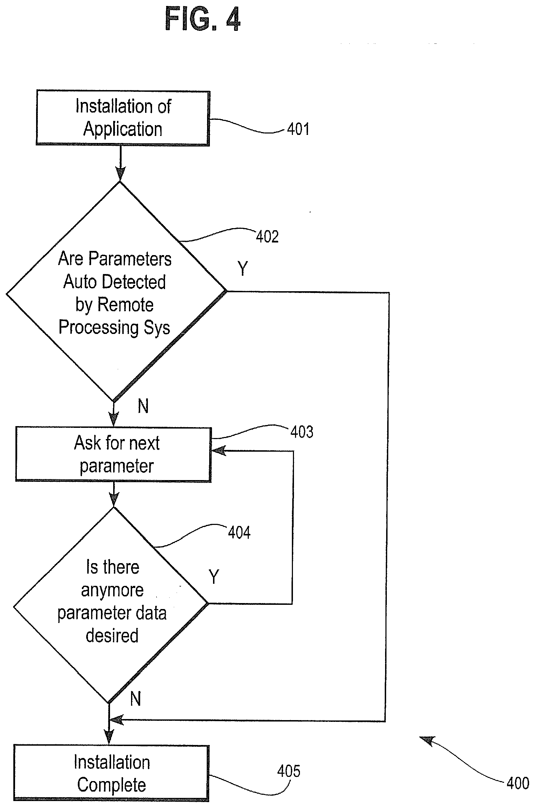

As mentioned above, application and target device compatibility may be determined at different times. For example, compatibility may be determined at the time the application is installed on the system. Alternatively, compatibility may be determined at the time the target device is detected. Furthermore, in forms where application parameters are used to determine compatibility, these parameters may be identified at different times. For example, in some forms, the application parameters may be automatically detected or manually entered at the time the application is installed on the system. Alternatively, the application parameters may be identified when a target device is identified and the system begins to review stored applications to identify and display only those applications that are compatible with the target device. In Fig. 4 a simplified flow diagram of a process is illustrated for detecting parameter data that may be used in accordance with the above mentioned systems and methods/processes. In this form, the process 400 begins with the application being installed in step 401 and determines if the application parameters are automatically detected by the first processing system in step 402. If the application parameters are automatically detected the system detects the parameters and completes the installation of the application in step 405. If the application parameters are not automatically detected, the process asks the developer or user installing the application to supply a first application parameter in step 403. Then in step 404 the system determines if anymore application parameters are desired. If more application parameters are desired, the process returns to step 403 and requires the installer or user to add the next application parameter data desired to be inputted. This cycle continues until there is no more application parameter data, at which time the process 400 completes the installation of the application via step 405.

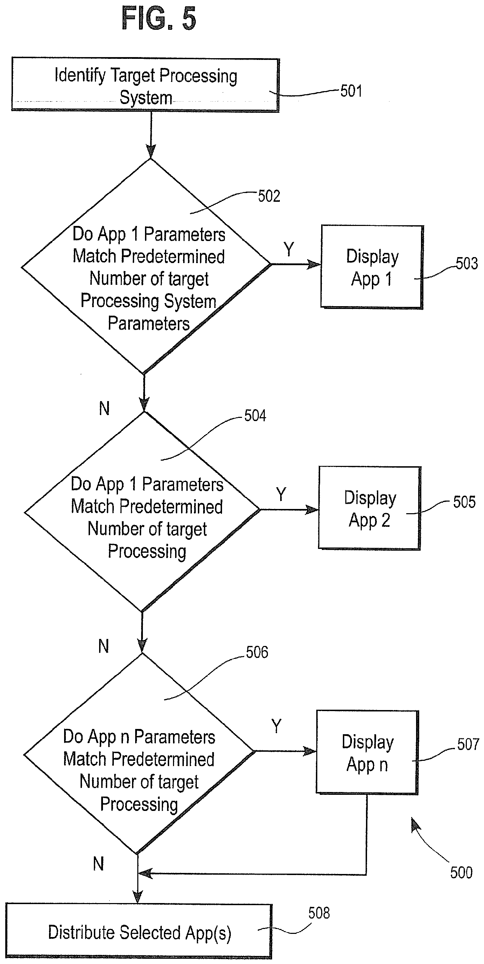

In Fig. 5 a simplified flow diagram of a process for determining compatibility of applications and target devices is illustrated. In this form, the process 500 identifies the target device in step 501 and begins to check the stored applications to determine which applications are compatible with the identified target device. In step 502 the process checks to see if the application parameters of a first application (e.g., App 1) match a predetermined amount or number of target device parameters. If not, the process moves to step 504. However, if so, the first application is identified by the system as a compatible application to the target device and the application is displayed to a potential consumer or user of the system in step 503 as a compatible application and the process moves to step 504. In step 504, the process checks to see if the application parameters of a second application (e.g., App 2) match a predetermined amount or number of target device parameters for the identified target device. If not, the process moves to step 505, but if so, the system identifies the second application as a compatible application to the target device and the application is displayed to a potential consumer or user of the system in step 505. In step 506, the process checks to see if the application parameters of the next application (e.g., App n) match a predetermined amount or number of target device parameters for the identified target device. If not, the system continues this process until all applications have been checked for comparison with the target device and eventually moves on to distribution in step 508, but if so, the system identifies the next application as a compatible application to the target device and the application is displayed to a potential consumer or user of the system in step 507 as a compatible application for the target device. In step 508, the process moves on to distribution and prepares any selected applications for downloading and installation to the target device.

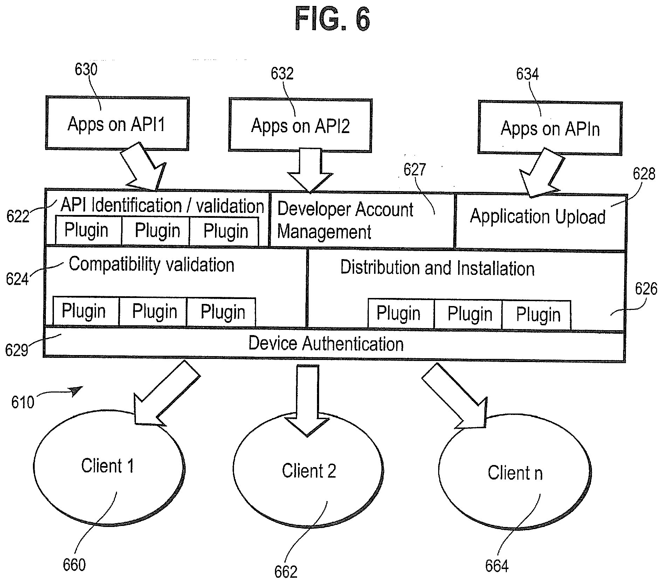

In Fig. 6 a block diagram representation of an alternate system for use in implementing methods, techniques, devices, apparatuses, systems, services, servers, sources and the like in presenting and/or distributing heterogeneous applications in accordance with some embodiments is illustrated. For convenience, items that are comparable to those items discussed above with system 10 in Figs. 1 and 2 will be identified using similar reference numerals but with the addition of the prefix "6". Thus, the system illustrated in Fig. 6 will be referenced to by reference numeral 610 (similar to how the system in Fig. 1 is referenced to by reference numeral 10).

In the embodiment illustrated, the system 610 includes a first processing system, like remote processing system 620, having a plurality of applications built on different platforms, like applications 630, 632 and 634, and a plurality of second processing systems, like local processing systems 660, 662 and 664. In one form the system 610 includes an API identification/validation module 622, a compatibility validation module 624 and a distribution and installation module 626. These modules and system 610 may be configured in any of the manners discussed above. In addition to these items, however, system 610 further includes a developer account management module 627, an application uploading module 628 and a device authentication module 629.

The developer account management module 627 may be configured to store information relating to registered developers, accounts or the like who have obtained permission or registered to install applications on system 610. For example, system 610 may be setup to require a key or code (e.g., API key, etc.) that is required to be used by the application developer in order to access an API and/or develop and install applications on system 610.

System 610 further includes an application uploading module 628 which may be an upload core module that allows users to upload files to system 610 or the associated server and portal relating to same (if applicable). For example, once a developer registers or obtains permission to upload applications or files via the developer account management module 627, the developer may upload applications to system 610 via uploading module 628. In some forms, the uploading module 628 may provide further capabilities such as allowing developers the ability to catalog or group his/her/their/its applications, control who can download developer's applications and/or control what applications or target devices the applications can be downloaded by and for (e.g., enable/disable downloading settings), administer storage location of uploaded files, configure account and/or content, control who can view, download, use, etc. and the like. In addition, the uploading module 628 may give others certain controls over system 610 and what can be uploaded for same. For example, the uploading module 628 may give a custodian control over application file sizes that can be uploaded, API sets that can be uploaded, developers or API keys that can upload, etc.

System 610 may also include a device authentication module 629 which, like application upload module 628, gives the system or a person or persons like a custodian control over who can download applications from system 610. For example, the device authentication module 629 may require users trying to gain access to system 610 to view and/or download applications to be authenticated or approved before such viewing and downloading can take place. In one form, the system 610 may comprise a subscription service that users have to subscribe to before being able to use the system 610 (e.g., view and download applications, etc.). If such is the case, the device authentication module 629 could be used to authenticate or confirm a second processing system, like local devices 630, 632 or 634, is authorized to use the system 610 or has permission to use the system 610 and, further, to determine how much access to grant the second processing system 630, 632 or 634 before allowing further access to system 610. In other forms, the device authentication module 629 may be used to establish a secure connection with the second processing system or client 630, 632 or 634, such as by using and/or exchanging certificates, establishing a VPN, etc.).

Like system 10, the modules of system 610 may be configured to be open modules capable of being expanded via plugins or the like. In the form illustrated, the API identification/validation module 622, compatibility validation module 624 and distribution and installation module 626 are illustrated having plugins for expanding these modules to account for new API sets, compatibilities and downloading and installation preparation techniques that are not already installed on system 610.

In addition to the above systems, methods for presenting and distributing applications for heterogeneous platforms ("heterogeneous applications") are disclosed herein comprising: providing a remote processing system containing a plurality of applications wherein at least some of the applications are heterogeneous applications programmed for different platforms, the remote processing system capable of being connected to a local processing system to present and distribute at least one of the plurality of heterogeneous applications to consumers; determining compatibility for each of the plurality of applications via the remote processing system; and presenting to a consumer via the remote processing system only those applications of the plurality of applications that are compatible with a target processing system.

As mentioned above, the target processing system may either be the local processing system itself or a component capable of being connected to the local processing system. In some forms both the plurality of applications and the target processing system may have corresponding parameter data and determining compatibility of each of the plurality of applications comprises identifying which of the plurality of applications have parameter data that matches a predetermined amount of the corresponding parameter data of the target processing system so that only those identified applications are presented to the consumer when presenting the compatible applications. The corresponding parameter data may cover any information about the application or target device that is desired to be compared in order to determine compatibility. For example, the corresponding parameter data may include information relating to at least one of a display size or resolution for the target device and/or application, whether or not the target device has touch screen capability and/or whether or not the application is programmed to use a touch screen interface, what type of keyboard the target device has and/or what type of keyboard the application is setup for, whether speakers are present or needed for the application, information about memory (e.g., total memory, available memory, available RAM, etc.), the type of programming code for the application or run by the target device, type of operating system the application is setup to run on or the target device operates with, whether the device is equipped with a camera and/or whether the application requires a camera, whether the device is equipped with a flash and/or whether the application requires a flash, whether the device has vibration capability and/or whether application requires use of vibration, whether the device has audio capability and/or whether the application requires audio, whether the device has a modem or other type of communication capability and/or whether the application requires such, whether the device has peripheral connections/interfaces or what type and/or whether the application requires same, whether the device has a battery or what type (e.g., whether it's a sufficient size battery) and/or whether application requires a battery (or a battery of sufficient type/size), etc. As indicated on some of the items listed above, the parameters may not be limited to (or just limited to) "whether" certain features are present and/or needed, but also "what type" of features are present and/or needed. For example, in some forms the parameters compared may not just pertain to whether the target device has audio capability and/or whether the application uses audio, but may also include what type of audio capabilities are present and/or whether the application requires this type of audio, etc.

In some forms of methods, determining compatibility comprises comparing the parameter data and only displaying those applications from the plurality of applications that match a predetermined amount of the corresponding parameter data of the target processing system. As mentioned above, what the predetermined amount is can be a number of different things including, but not limited to, matching API set information, matching a certain number of parameters (e.g., screen size/resolution, API and keyboard, or matching a certain percentage of specified parameters (e.g., > 50%, > 75%, etc.) or requiring matching of all specified parameters, etc.

In addition, in some forms the parameters are closed sets of data and in others they are open sets of data that can be added to by a developer, custodian, user, etc. For example, in one embodiment, the application parameter data is a closed set of parameters required to be uploaded to the remote processing system when uploading the at least one of the plurality of applications to the remote processing system, and the method further comprises uploading the closed set of parameters to the remote processing system. In another example, the application parameter data is an open set of parameters that can be identified when uploading the at least one of the plurality of applications to the remote processing system, the method further comprising uploading the open set of parameters to the remote processing system.

The method may further include uploading of at least one of the heterogeneous applications. For example, in one form the remote processing system is capable of receiving uploaded applications and at least one of the plurality of applications stored on the system is uploaded to the remote processing system, and the method further comprises storing the at least one of the plurality of applications uploaded to the remote processing system in a non-transitory storage medium. The remote processing system may further require uploading of the application parameter data for the at least one of the plurality of applications uploaded to the remote processing system when the at least one of the plurality of applications is uploaded to the system. In other forms, the method may comprise automatically identifying with the remote processing system the application parameter data for the at least one of the plurality of applications uploaded to the remote processing system either when the at least one of the plurality of applications is uploaded or after the at least one of the plurality of applications is uploaded.

As mentioned above with respect to systems 10 and 610, the timing of determining the compatibility of the applications/target devices may be done at different times (e.g., right when the application is installed on the system, periodically or continuously, once a target device is identified for which the user wishes the system to display compatible applications, etc.). For example, in one form determining the compatibility of each of the plurality of applications is done by the remote processing system when the plurality of applications are installed on the remote processing system and presenting the compatible applications to the consumer comprises presenting the compatible applications when the target processing system is identified. In another form, determining the compatibility of each of the plurality of applications is done by the remote processing system when the target processing system is identified and presenting the compatible applications to the consumer comprises presenting the compatible applications after the target processing system is identified.

The method may also include distributing over the network at least one of the presented applications to the target processing system once a presented application is selected by the consumer. As mentioned above with respect to systems 10 and 610, the method of distribution may including preparing the application for downloading and installation and may involve downloading the application in any one of a variety of different formats and using any one of a variety of techniques. For example, the application may be distributed by zipping and downloading an executable (.exe) file in a compressed format and automatically launching an installation program to install the application to the target device. In other forms, distribution may include downloading the application to a desktop manager program on the local processing system that synchronizes (or syncs) with the target device to install the application on the target device.

The method may include other features to help improve the likelihood that all compatible applications are presented to a user for a particular target device (whether those applications have been designed using the exact code that is required for a particular target device or a sufficiently similar code that is capable of operability or being operated by the target device). For example, in one form, the target processing system will have a specific platform and the steps of determining compatibility and presenting applications to the potential consumer for the method may comprise identifying and presenting applications that are written for the specific platform of the target processing system as well as applications that are not written for the specific platform of the target processing system but that are written in a language or code that should be or is readable and executable by the target processing system. In other forms, the steps of determining compatibility and presenting applications to the consumer may further comprise identifying and presenting applications that are potentially compatible with the target processing system if installed along with a secondary application and presenting both the potentially compatible application and the secondary application to the consumer. For example, the system and/or method may entail presenting an application that would work on a target system if the target system downloaded some additional program and preferably would indicate that this is the case when presenting the applications to the potential consumer. For example, the system may display a list of compatible applications (whether it be by icon, list, detail, tile, etc. as mentioned above) and on those requiring the downloading of an additional program would display both applications side-by-side and require the downloading of both and not one without the other.

In other embodiments, a method of presenting and distributing heterogeneous applications for a plurality of different consumer devices may comprise: providing a remote processing system having an application identification module, a compatibility validation module, a distribution module and a storage medium for storing a plurality of applications wherein at least some of the plurality of applications are heterogeneous applications programmed for different platforms; identifying which platform each of the plurality of applications is programmed for via the application identification module; detecting with the compatibility validation module which of the plurality of different consumer devices and applications are compatible with one another; and preparing compatible applications for download and installation to a target consumer device using the distribution module once the target device is identified. The remote processing system may be a server connected to a network, such as the Internet, thereby forming an online portal for presenting and distributing heterogeneous applications or applications for heterogeneous platforms. In this form, the method may further comprise presenting via the online portal the compatible applications for download and installation to the target consumer device.

In still other embodiments, one or more of the embodiments, methods, processes, approaches, and/or techniques described above may be implemented in a computer program executable by a processor-based system. By way of example, such a processor based system may comprise the processor based system previously discussed, or a alternate computer, IP enabled television, IP enabled Blu-ray player, entertainment system, game console, graphics workstation, cellular phone, smart phone, tablet, etc. Such computer programs may be used for executing various steps and/or features of the above or below described methods, processes and/or techniques. That is, the computer program may be adapted to cause or configure a processor-based system to execute and achieve the functions described above or below. For example, such computer programs may be used for implementing any embodiment of the above or below described steps, processes or techniques for allowing the presentation and/or distribution of applications for heterogeneous platforms, including but not limited to, the identification of applications, the determination of compatibility between applications and target devices, and the distribution of such compatible applications. As another example, such computer programs may be used for implementing any type of tool or similar utility that uses any one or more of the above or below described embodiments, methods, processes, approaches, and/or techniques. In some embodiments, program code modules, loops, subroutines, etc., within the computer program may be used for executing various steps and/or features of the above or below described methods, processes and/or techniques. In some embodiments, the computer program may be stored or embodied on a computer readable storage or recording medium or media, such as any of the computer readable storage or recording medium or media described herein.

Accordingly, some embodiments provide a processor or computer program product comprising a medium for embodying a computer program for input to a processor or computer and a computer program embodied in the medium for causing the processor or computer to perform or execute steps comprising any one or more of the steps involved in any one or more of the embodiments, methods, processes, approaches, and/or techniques described herein. For example, some embodiments provide a computer-readable storage medium storing a computer program for use with a computer simulation, the computer program adapted to cause a computer and/or processor based system to execute steps comprising: receiving a plurality of applications wherein at least some of the applications are heterogeneous applications programmed for different platforms; determining compatibility for each of the plurality of applications; and communicating which applications from the plurality of applications are compatible with a target processing system once the target processing system is identified.

In some forms the computer program may be adapted to cause a computer and/or processor based system to perform the step of comparing parameter data relating to each of the plurality of applications and the target processing system and identifying applications that have a predetermined number of matches between application parameter data and target processing system parameter data. In addition, in some forms the computer program may be adapted to cause a computer and/or processor based system to perform the step of identifying each of the plurality of applications. As mentioned above, this step may entail automatically identifying each of the plurality of applications when installed or when a target device is identified, or alternatively, may involve requiring the installer to identify the application when it is installed.

The computer program may also be adapted to cause a computer and/or processor based system to perform the step of uploading at least one of the plurality of applications to a storage medium. In addition in some forms the computer program may be adapted to cause a computer and/or processor based system to perform the step of requiring uploading of application parameter data when the at least one of the plurality of applications is uploaded to the storage medium. As mentioned above, the computer program may be configured to automatically detect and upload the application parameter data for the application or it may be configured to require the entry of this data when the application is being uploaded. In addition, in other forms, the computer program may be adapted to cause a computer and/or processor based system to perform the step of distributing over a network at least one of the compatible applications to the target processing system once the application is selected by a consumer for downloading.

In alternate embodiments, systems 10 and 610, networks 50 and 650, and local processing systems 60, 62, 64 and 660, 662 and 664 may be implemented using components and configurations in addition to, or instead of, certain of those components and configurations discussed in conjunction with the embodiments of Fig. 1, 2 and 6. Furthermore, in the illustrated embodiments, the systems 10 and 610 may be implemented as any type of appropriate electronic device. For example, in certain embodiments, the first processing system may be designed as an online database or server accessible to application developers for uploading new applications and/or potential consumers for viewing and/or purchasing compatible applications from the system.

Furthermore, the described features, structures, or characteristics of the invention may be combined in any suitable manner in one or more embodiments. In the following description, numerous specific details are provided, such as examples of programming, software modules, user selections, network transactions, database queries, database structures, hardware modules, hardware circuits, hardware chips, etc., to provide a thorough understanding of embodiments of the invention. One skilled in the relevant art will recognize, however, that the invention can be practiced without one or more of the specific details, or with other methods, components, materials, and so forth. In other instances, well-known structures, materials, or operations are not shown or described in detail to avoid obscuring aspects of the invention.

While the invention herein disclosed has been described by means of specific embodiments, examples and applications thereof, numerous modifications and variations could be made thereto by those skilled in the art without departing from the scope of the invention set forth in the claims.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

Various respective aspects and features of the invention are defined in the appended claims. Combinations of features from the dependent claims may be combined with features of the independent claims as appropriate and not merely as explicitly set out in the claims.

## Claims

1. A method for presenting and distributing heterogeneous applications comprising:
providing a remote processing system (20) having a non-transitory storage medium (40) storing a plurality of applications (30, 32, 34) for target processing systems (60, 62, 64) wherein at least some of the applications are heterogeneous applications programmed for different platforms, the remote processing system capable of being connected to a local processing system (60, 62, 64) to present and distribute any of the plurality of heterogeneous applications to consumers;
determining an application programming interface, API, associated with each of the plurality of applications;
determining compatibility with target processing systems for each of the plurality of applications via the remote processing system based on at least the determined API associated with the plurality of applications; and
presenting to a consumer via the remote processing system only those applications of the plurality of applications that are compatible with a target processing system.

2. A method according to claim 1 wherein the target processing system is either the local processing system or a component capable of being connected to the local processing system and both the plurality of applications and the target processing system have corresponding parameter data (36, 66) and determining compatibility of each of the plurality of applications comprises identifying which of the plurality of applications have parameter data that matches a predetermined amount of the corresponding parameter data of the target processing system so that only those identified applications are presented to the consumer when presenting the compatible applications.

3. A method according to claim 2 wherein the corresponding parameter data includes information relating to at least one of a display size or resolution, touch screen capability, keyboard, speaker, memory, programming code, operating system, camera, flash, vibration capability, audio capability, modem, peripheral connections interface type and battery, and determining compatibility comprises comparing the parameter data and only displaying those applications from the plurality of applications that match a predetermined amount of the corresponding parameter data of the target processing system.

4. A method according to claim 2 wherein the remote processing system is capable of receiving uploaded applications and at least one of the plurality of applications is uploaded to the remote processing system, the method further comprises storing the at least one of the plurality of applications uploaded to the remote processing system in the non-transitory storage medium.

5. A method according to claim 4 wherein the application parameter data is a closed set of parameters that cannot be added to and which is required to be uploaded to the remote processing system when uploading the at least one of the plurality of applications to the remote processing system, the method further comprising uploading the closed set of parameters to the remote processing system.

6. A method according to claim 4 wherein the application parameter data is an open set of parameters that can be added to and that can be identified when uploading the at least one of the plurality of applications to the remote processing system, the method further comprising uploading the open set of parameters to the remote processing system.

7. A method according to claim 4 wherein the remote processing system further requires uploading of the application parameter data for the at least one of the plurality of applications uploaded to the remote processing system when the at least one of the plurality of applications is uploaded.

8. A method according to claim 4 further comprising identifying with the remote processing system the application parameter data for the at least one of the plurality of applications uploaded to the remote processing system either when the at least one of the plurality of applications is uploaded or after the at least one of the plurality of applications is uploaded.

9. A method according to claim 2 wherein determining the compatibility of each of the plurality of applications is done by the remote processing system when the plurality of applications are installed on the remote processing system and presenting the compatible applications to the consumer comprises presenting the compatible applications when the target processing system is identified.

10. A method according to claim 2 wherein determining the compatibility of each of the plurality of applications is done by the remote processing system when the target processing system is identified and presenting the compatible applications to the consumer comprises presenting the compatible applications after the target processing system is identified.

11. A method according to claim 2 further comprising distributing over the network (50) at least one of the presented applications to the target processing system once a presented application is selected by the consumer.

12. A method according to claim 1 wherein the target processing system has a specific platform and determining compatibility and presenting to the consumer comprises identifying and presenting applications that are written for the specific platform of the target processing system as well as applications that are not written for the specific platform of the target processing system but that are written in a language or code that should be readable and executable by the target processing system.

13. A method according to claim 12 wherein determining compatibility and presenting to the consumer comprises identifying and presenting applications that are compatible with the target processing system if installed along with a secondary application and presenting both the compatible application and the secondary application to the consumer.

14. A system (10) for presenting and distributing heterogeneous applications (30, 32, 34) comprising:
a storage medium (40) for storing a plurality of applications (30, 32, 34) wherein at least some of the applications are heterogeneous applications programmed for different platforms; and
a first processing system (20) connected to the storage medium and configured to perform the steps of determining compatibility and presenting from the method according to claim 1, and optionally also the steps recited in the methods of any of claims 2 to 13.

15. A computer program product comprising a medium for embodying a computer program for input to a processor based system and a computer program embodied in the medium configured to cause the processor based system to perform steps comprising:
receiving a plurality of applications (30, 32, 34) wherein at least some of the applications are heterogeneous applications programmed for different platforms;
the determining compatibility and presenting steps from the method of claim 1; and optionally, the steps recited in the methods of any of claims 2 to 13.

## Patentansprüche

1. Verfahren zum Präsentieren und Verteilen von heterogenen Anwendungen, umfassend:
Bereitstellen eines entfernten Verarbeitungssystems (20) mit einem nicht vergänglichen Speichermedium (40), das eine Vielzahl von Anwendungen (30, 32, 34) für Zielverarbeitungssysteme (60, 62, 64) speichert, wobei mindestens einige der Anwendungen heterogene Anwendungen sind, die für verschiedene Plattformen programmiert sind, wobei das entfernte Verarbeitungssystem imstande ist, mit einem lokalen Verarbeitungssystem (60, 62, 64) verbunden zu werden, um beliebige der Vielzahl von heterogenen Anwendungen Kunden zu präsentieren und an diese zu verteilen;
Bestimmen einer mit jeder der Vielzahl von Anwendungen assoziierten Anwendungsprogrammierungsschnittstelle, API;
Bestimmen einer Kompatibilität mit Zielverarbeitungssystemen für jede der Vielzahl von Anwendungen über das entfernte Verarbeitungssystem basierend auf mindestens der bestimmten, mit der Vielzahl von Anwendungen assoziierten API; und
Präsentieren, einem Kunden über das entfernte Verarbeitungssystem, nur derjenigen Anwendungen der Vielzahl von Anwendungen, die mit einem Zielverarbeitungssystem kompatibel sind.

2. Verfahren nach Anspruch 1, wobei das Zielverarbeitungssystem entweder das lokale Verarbeitungssystem oder eine Komponente ist, die imstande ist, mit dem lokalen Verarbeitungssystem verbunden zu werden, und sowohl die Vielzahl von Anwendungen als auch das Zielverarbeitungssystem korrespondierende Parameterdaten (36, 66) aufweisen und Bestimmen der Kompatibilität jeder der Vielzahl von Anwendungen umfasst, zu identifizieren, welche der Vielzahl von Anwendungen Parameterdaten aufweisen, die mit einer im Voraus bestimmten Menge der korrespondierenden Parameterdaten des Zielverarbeitungssystems übereinstimmen, so dass nur diese identifizierten Anwendungen dem Kunden präsentiert werden, wenn die kompatiblen Anwendungen präsentiert werden.

3. Verfahren nach Anspruch 2, wobei die korrespondierenden Parameterdaten Informationen bezüglich mindestens eines einer Anzeigegröße oder -auflösung, einer Berührungsbildschirm-Fähigkeit, einer Tastatur, eines Lautsprechers, eines Speichers, eines Programmierungscodes, eines Betriebssystems, einer Kamera, eines Blitzes, einer Vibrationsfähigkeit, einer Audiofähigkeit, eines Modems, eines Typs einer Schnittstelle für periphere Anschlüsse und einer Batterie enthalten und wobei Bestimmen einer Kompatibilität umfasst, die Parameterdaten zu vergleichen und nur diejenigen Anwendungen aus der Vielzahl von Anwendungen anzuzeigen, die mit einer im Voraus bestimmten Menge der korrespondierenden Parameterdaten des Zielverarbeitungssystems übereinstimmen.

4. Verfahren nach Anspruch 2, wobei das entfernte Verarbeitungssystem imstande ist, hochgeladene Anwendungen zu empfangen, und wobei mindestens eine der Vielzahl von Anwendungen zu dem entfernten Verarbeitungssystem hochgeladen wird, wobei das Verfahren ferner umfasst, die zu dem entfernten Verarbeitungssystem hochgeladene mindestens eine der Vielzahl von Anwendungen in dem nicht vergänglichen Speichermedium zu speichern.

5. Verfahren nach Anspruch 4, wobei die Anwendungsparameterdaten eine abgeschlossene Menge von Parametern sind, der nichts hinzugefügt werden kann und die zu dem entfernten Verarbeitungssystem hochgeladen werden muss, wenn die mindestens eine der Vielzahl von Anwendungen zu dem entfernten Verarbeitungssystem hochgeladen wird, das Verfahren ferner umfassend, die abgeschlossene Menge von Parametern zu dem entfernten Verarbeitungssystem hochzuladen.

6. Verfahren nach Anspruch 4, wobei die Anwendungsparameterdaten eine offene Menge von Parametern sind, der etwas hinzugefügt werden kann und die identifiziert werden kann, wenn die mindestens eine der Vielzahl von Anwendungen zu dem entfernten Verarbeitungssystem hochgeladen wird, das Verfahren ferner umfassend, die offene Menge von Parametern zu dem entfernten Verarbeitungssystem hochzuladen.

7. Verfahren nach Anspruch 4, wobei das entfernte Verarbeitungssystem ferner erfordert, die Anwendungsparameterdaten für die mindestens eine der zu dem entfernten Verarbeitungssystem hochgeladenen Vielzahl von Anwendungen hochzuladen, wenn die mindestens eine der Vielzahl von Anwendungen hochgeladen wird.

8. Verfahren nach Anspruch 4, ferner umfassend Identifizieren, mit dem entfernten Verarbeitungssystem, der Anwendungsparameterdaten für die mindestens eine der zu dem entfernten Verarbeitungssystem hochgeladenen Vielzahl von Anwendungen, entweder wenn die mindestens eine der Vielzahl von Anwendungen hochgeladen wird oder nachdem die mindestens eine der Vielzahl von Anwendungen hochgeladen wurde.

9. Verfahren nach Anspruch 2, wobei Bestimmen der Kompatibilität jeder der Vielzahl von Anwendungen durch das entfernte Verarbeitungssystem durchgeführt wird, wenn die Vielzahl von Anwendungen auf dem entfernten Verarbeitungssystem installiert wird, und wobei Präsentieren der kompatiblen Anwendungen dem Kunden umfasst, die kompatiblen Anwendungen zu präsentieren, wenn das Zielverarbeitungssystem identifiziert wird.

10. Verfahren nach Anspruch 2, wobei Bestimmen der Kompatibilität jeder der Vielzahl von Anwendungen durch das entfernte Verarbeitungssystem durchgeführt wird, wenn das Zielverarbeitungssystem identifiziert wird, und wobei Präsentieren der kompatiblen Anwendungen dem Kunden umfasst, die kompatiblen Anwendungen zu präsentieren, nachdem das Zielverarbeitungssystem identifiziert wurde.

11. Verfahren nach Anspruch 2, ferner umfassend Verteilen, über das Netzwerk (50), mindestens einer der präsentierten Anwendungen an das Zielverarbeitungssystem, sobald eine präsentierte Anwendung durch den Kunden ausgewählt wird.

12. Verfahren nach Anspruch 1, wobei das Zielverarbeitungssystem eine spezifische Plattform aufweist und wobei Bestimmen einer Kompatibilität und Präsentieren, dem Kunden, umfasst, Anwendungen, die für die spezifische Plattform des Zielverarbeitungssystems geschrieben sind, sowie Anwendungen, die nicht für die spezifische Plattform des Zielverarbeitungssystems geschrieben sind, die aber in einer Sprache oder einem Code geschrieben sind, die/der durch das Zielverarbeitungssystem lesbar und ausführbar sein sollte, zu identifizieren und zu präsentieren.

13. Verfahren nach Anspruch 12, wobei Bestimmen einer Kompatibilität und Präsentieren, dem Kunden, umfasst, Anwendungen, die mit dem Zielverarbeitungssystem kompatibel sind, wenn sie zusammen mit einer sekundären Anwendung installiert werden, zu identifizieren und zu präsentieren und sowohl die kompatible Anwendung als auch die sekundäre Anwendung dem Kunden zu präsentieren.

14. System (10) zum Präsentieren und Verteilen von heterogenen Anwendungen (30, 32, 34), umfassend:
ein Speichermedium (40) zum Speichern einer Vielzahl von Anwendungen (30, 32, 34), wobei mindestens einige der Anwendungen für verschiedene Plattformen programmierte heterogene Anwendungen sind; und
ein erstes Verarbeitungssystem (20), verbunden mit dem Speichermedium und konfiguriert zum Durchführen der Schritte des Bestimmens einer Kompatibilität und des Präsentierens aus dem Verfahren nach Anspruch 1 und wahlweise außerdem der in den Verfahren nach einem der Ansprüche 2 bis 13 angeführten Schritte.

15. Computerprogrammprodukt, umfassend ein Medium zum Verkörpern eines Computerprogramms zur Eingabe in ein prozessorbasiertes System und ein in dem Medium verkörpertes Computerprogramm, konfiguriert zum Bewirken, dass das prozessorbasierte System Schritte ausführt, umfassend:
Empfangen einer Vielzahl von Anwendungen (30, 32, 34), wobei mindestens einige der Anwendungen für verschiedene Plattformen programmierte heterogene Anwendungen sind;
die Schritte zum Bestimmen einer Kompatibilität und zum Präsentieren aus dem Verfahren von Anspruch 1; und wahlweise die in den Verfahren nach einem der Ansprüche 2 bis 13 angeführten Schritte.

## Revendications

1. Procédé de présentation et de distribution d'applications hétérogènes, comprenant :
la fourniture d'un système de traitement distant (20) doté d'un support d'enregistrement non transitoire (40) sur lequel sont enregistrées une pluralité d'applications (30, 32, 34) pour des systèmes de traitement cibles (60, 62, 64), au moins certaines des applications consistant en des applications hétérogènes programmées pour des plateformes différentes, le système de traitement distant étant apte à être connecté à un système de traitement local (60, 62, 64) afin de présenter et distribuer l'une quelconque de la pluralité d'applications hétérogènes à des consommateurs ;
la détermination d'une interface de programmation d'application, API, associée à chacune de la pluralité d'applications ;
la détermination d'une compatibilité avec des systèmes de traitement cibles pour chacune de la pluralité d'applications par l'entremise du système de traitement distant sur la base au moins de l'API déterminée associée à la pluralité d'applications ; et
la présentation à un consommateur, par l'entremise du système de traitement distant, seulement des applications de la pluralité d'applications qui sont compatibles avec un système de traitement cible.

2. Procédé selon la revendication 1, dans lequel le système de traitement cible consiste soit en le système de traitement local, soit en un composant apte à être connecté au système de traitement local, et tant la pluralité d'applications que le système de traitement cible possèdent des données paramètres correspondantes (36, 66), et la détermination d'une compatibilité de chacune de la pluralité d'applications comprend l'identification de celles de la pluralité d'applications qui possèdent des données paramètres qui satisfont à une quantité prédéterminée des données paramètres correspondantes du système de traitement cible de sorte que seules les applications identifiées soient présentées au consommateur lors de la présentation des applications compatibles.

3. Procédé selon la revendication 2, dans lequel les données paramètres correspondantes comportent des informations relatives à au moins un élément dans le groupe constitué par une dimension ou résolution d'affichage, une fonctionnalité écran tactile, un clavier, un haut-parleur, une mémoire, un code de programmation, un système d'exploitation, un appareil de prise de vues, un flash, une fonctionnalité vibratoire, une fonctionnalité audio, un modem, des connexions périphériques, un type d'interface et une batterie, et la détermination d'une compatibilité comprend la comparaison des données paramètres et le seul affichage des applications parmi la pluralité d'applications qui satisfont à une quantité prédéterminée des données paramètres correspondantes du système de traitement cible.

4. Procédé selon la revendication 2, dans lequel le système de traitement distant est apte à recevoir des applications téléchargées en amont et au moins une de la pluralité d'applications est téléchargée en amont vers le système de traitement distant, le procédé comprenant en outre l'enregistrement de l'au moins une de la pluralité d'applications téléchargées en amont vers le système de traitement distant dans le support d'enregistrement non transitoire.

5. Procédé selon la revendication 4, dans lequel les données paramètres d'application consistent en un ensemble fermé de paramètres non modifiable et dont le téléchargement en amont vers le système de traitement distant s'avère nécessaire lors du téléchargement en amont de l'au moins une de la pluralité d'applications vers le système de traitement distant, le procédé comprenant en outre le téléchargement en amont de l'ensemble fermé de paramètres vers le système de traitement distant.

6. Procédé selon la revendication 4, dans lequel les données paramètres d'application consistent en un ensemble ouvert de paramètres modifiable et identifiable lors du téléchargement en amont de l'au moins une de la pluralité d'applications vers le système de traitement distant, le procédé comprenant en outre le téléchargement en amont de l'ensemble ouvert de paramètres vers le système de traitement distant.

7. Procédé selon la revendication 4, dans lequel le système de traitement distant nécessite en outre le téléchargement en amont des données paramètres d'application pour l'au moins une de la pluralité d'applications téléchargée en amont vers le système de traitement distant lors du téléchargement en amont de l'au moins une de la pluralité d'applications.

8. Procédé selon la revendication 4, comprenant en outre l'identification, au moyen du système de traitement distant, des données paramètres d'application pour l'au moins une de la pluralité d'applications téléchargée en amont vers le système de traitement distant soit lors du téléchargement en amont de l'au moins une de la pluralité d'applications, soit suite au téléchargement en amont de l'au moins une de la pluralité d'applications.

9. Procédé selon la revendication 2, dans lequel la détermination de la compatibilité de chacune de la pluralité d'applications est effectuée par le système de traitement distant lors de l'installation de la pluralité d'applications sur le système de traitement distant, et la présentation des applications compatibles au consommateur comprend la présentation des applications compatibles lors de l'identification du système de traitement cible.

10. Procédé selon la revendication 2, dans lequel la détermination de la compatibilité de chacune de la pluralité d'applications est effectuée par le système de traitement distant lors de l'identification du système de traitement cible, et la présentation des applications compatibles au consommateur comprend la présentation des applications compatibles suite à l'identification du système de traitement cible.

11. Procédé selon la revendication 2, comprenant en outre la distribution, par le biais du réseau (50), d'au moins une des applications présentées vers le système de traitement cible dès qu'une application présentée est sélectionnée par le consommateur.

12. Procédé selon la revendication 1, dans lequel le système de traitement cible est doté d'une plateforme spécifique et la détermination d'une compatibilité et la présentation au consommateur comprennent l'identification et la présentation d'applications qui ont été écrites pour la plateforme spécifique du système de traitement cible ainsi que d'applications qui n'ont pas été écrites pour la plateforme spécifique du système de traitement cible mais qui ont été écrites dans un langage ou code qui devrait être lisible et exécutable par le système de traitement cible.

13. Procédé selon la revendication 12, dans lequel la détermination d'une compatibilité et la présentation au consommateur comprennent l'identification et la présentation d'applications qui sont compatibles avec le système de traitement cible si elles sont installées conjointement avec une application secondaire et la présentation tant de l'application compatible que de l'application secondaire au consommateur.

14. Système (10) de présentation et de distribution d'applications hétérogènes (30, 32, 34), comprenant :
un support d'enregistrement (40) destiné à enregistrer une pluralité d'applications (30, 32, 34), au moins certaines des applications consistant en des applications hétérogènes programmées pour des plateformes différentes ; et
un premier système de traitement (20) connecté au support d'enregistrement et configuré pour réaliser les étapes de détermination d'une compatibilité et de présentation du procédé selon la revendication 1 et, éventuellement, également les étapes exposées dans les procédés selon l'une quelconque des revendications 2 à 13.

15. Produit-programme d'ordinateur, comprenant un support destiné à incorporer un programme d'ordinateur à entrer dans un système à base de processeur et un programme d'ordinateur incorporé dans le support configuré pour amener le système à base de processeur à réaliser des étapes comprenant :
la réception d'une pluralité d'applications (30, 32, 34), au moins certaines des applications consistant en des applications hétérogènes programmées pour des plateformes différentes ;
les étapes de détermination d'une compatibilité et de présentation du procédé selon la revendication 1 ; et, éventuellement, les étapes exposées dans les procédés selon l'une quelconque des revendications 2 à 13.
